# EUROPEAN PATENT APPLICATION

(11) **EP 4 064 428 A1**
(43) Date of publication of application: **28.09.2022**
(21) Application number: 22162593.2
(22) Date of filing: 16.03.2022
(51) Int. Cl.: H01M 50/176, H01M 50/188, H01M 50/553, H01M 50/567, H01M 50/593, H01M 50/528

(54) **BATTERY CELL, FEED-THROUGH ASSEMBLY AND ELECTRONIC DEVICE**

(30) Priority: 24.03.2021 CN 202120601717 U
(71) Applicant: Ningde Amperex Technology Ltd., Ningde, Fujian 350900 (CN)
(72) Inventor: YUN, Jiaye, NINGDE, 352100 (CN)
(74) Representative: Icosa

(57) **Abstract**

A battery cell (1) includes a housing assembly (100) provided with an aperture (102), an electrode assembly (200), a conductive strip (300), and a feed-through assembly (400) including a first gasket (410), a second gasket (420), a conductive terminal (430), and a rivet (440). The first gasket (410) is disposed on an outer surface of the housing assembly (100). The second gasket (420) includes an integrally formed second gasket body (421) disposed on an inner surface of the housing assembly (100) and an annular sleeve (422) at least partly located in the aperture (102). The conductive terminal (430) is disposed on a side of the second gasket (420) facing back from the first gasket (410). The rivet (440) passes through the first gasket (410), the aperture (102), the annular sleeve (422), the second gasket body (421), and the conductive terminal (430), and is electrically connected to the conductive terminal (430). The rivet (440) abuts against the first gasket (410) and the second gasket (420) to form a seal at the aperture (102).

## Description

### TECHNICAL FIELD

This application relates to the technical field of batteries, and in particular, to a battery cell, a feed-through assembly and an electronic device.

### BACKGROUND

A battery cell is a device that converts external energy into electrical energy and stores the electrical energy internally so that the electrical energy may be supplied to an external device (such as a portable electronic device) when necessary. Generally, the battery cell includes a housing assembly and an electrode assembly disposed in the housing assembly. The electrode assembly generally includes a positive electrode plate and a negative electrode plate that are alternately arranged, and includes a separator disposed between the positive electrode plate and the negative electrode plate to separate the two electrode plates. Generally, the housing assembly is a conductor. Of the positive electrode plate and the negative positive plate, one is electrically connected to the housing assembly through a conductive element, and the other needs to, through a conductive strip, be indirectly electrically connected to a feed-through assembly that passes through the housing assembly, and concurrently needs to keep insulated from the housing assembly to avoid a short circuit of the battery cell.

In the prior art, the feed-through assembly is welded and fixed to the housing assembly. However, the thermal effect of the welding process results in a significant change of a stress of the housing assembly occurring at a local position corresponding to the feed-through assembly, consequently deteriorating the sealing performance of the battery cell.

### SUMMARY

An objective of this application is to provide a battery cell, a feed-through assembly and an electronic device to improve the following technical problem of the battery cell in the prior art: with the feed-through assembly welded to the housing assembly, the stress of the housing assembly changes significantly at a local position corresponding to the feed-through assembly due to the thermal effect.

To improve the technical problem, embodiments of this application adopt the following technical solution:
A battery cell, including a housing assembly, an electrode assembly, a conductive strip, and a feed-through assembly. The housing assembly accommodates the electrode assembly and the conductive strip. The housing assembly is provided with an aperture configured to install the feed-through assembly. The feed-through assembly includes a first gasket, a second gasket, a conductive terminal, and a rivet. The first gasket is disposed on an outer surface of the housing assembly. The second gasket includes an integrally formed second gasket body and an annular sleeve. The second gasket body is disposed on an inner surface of the housing assembly and is disposed opposite to the first gasket. The annular sleeve is fixed to a side of the second gasket body facing the first gasket. The annular sleeve is at least partly located in the aperture. The conductive terminal is accommodated in the housing assembly and is disposed on a side of the second gasket body facing back from the first gasket. The rivet includes a shaft portion, an end portion, and a limiting portion. The shaft portion passes through the first gasket, the aperture, the annular sleeve, the second gasket body, and the conductive terminal. The end portion is disposed at an end of the shaft portion protruding from the housing assembly. The limiting portion is disposed at an end of the shaft portion accommodated in the housing assembly, and is electrically connected to the conductive terminal. The end portion and the limiting portion squeeze the first gasket and the second gasket to seal the aperture. The conductive strip is electrically connected to the electrode assembly and the conductive terminal separately.

In some embodiments, the first gasket includes a first gasket body and an annular bulge. The first gasket body is provided with a first through hole available for the rivet to pass through. The annular bulge is disposed on an end face of the first gasket body and surrounds an end of the first through hole.

In some embodiments, the limiting portion is formed by compressive deformation of the rivet in a riveting process.

In some embodiments, a side wall of the second gasket body at least partly fits snugly with the inner surface of the housing assembly to hinder the second gasket from rotating around the rivet with respect to the housing assembly; or, the second gasket is fixed to the housing assembly.

In some embodiments, the second gasket body is provided with a receptacle slot configured to accommodate at least a part of the conductive terminal. A side wall of the conductive terminal at least partly fits snugly with a slot wall of the receptacle slot to hinder the conductive terminal from rotating with respect to the second gasket.

In some embodiments, the side wall of the conductive terminal includes two first side wall units disposed opposite to each other. The slot wall of the receptacle slot includes two second side wall units disposed opposite to each other. Each of the first side wall units fits snugly with a corresponding second side wall unit. The first side wall unit is flat.

In some embodiments, the conductive terminal is provided with an accommodation slot configured to accommodate the limiting portion.

In some embodiments, a side wall of the limiting portion at least partly fits snugly with a side wall of the accommodation slot to hinder the rivet from rotating with respect to the conductive terminal.

In some embodiments, the battery cell further includes an insulation baffle. The insulation baffle is disposed between the limiting portion and the electrode assembly. The insulation baffle is provided with a conduit. The conductive strip passes through the conduit and is connected to the rivet.

In some embodiments, the insulation baffle is adhesively fixed to a side of the second gasket body facing back from the first gasket.

This application further provides a feed-through assembly. The feed-through assembly includes a first gasket, a second gasket, a conductive terminal, and a rivet. The second gasket including an integrally formed second gasket body and an annular sleeve. The second gasket body is disposed opposite to the first gasket. The annular sleeve is fixed to a side of the second gasket body facing the first gasket. The conductive terminal is disposed on a side of the second gasket body facing back from the first gasket. The rivet includes a shaft portion and an end portion. The shaft portion is configured to pass through the first gasket, the annular sleeve, the second gasket body, and the conductive terminal. The end portion is disposed at a first end of the shaft portion. A second end of the shaft portion is configured to form the limiting portion by being compressed in a riveting process, so that either the end portion or the limiting portion is connected to the conductive terminal, and the end portion and the limiting portion squeeze the first gasket and the second gasket.

In some embodiments, the first gasket includes a first gasket body and an annular bulge. The first gasket body is provided with a first through hole available for the rivet to pass through. The annular bulge is disposed on an end face of the first gasket body and surrounds an end of the first through hole.

In some embodiments, the second gasket body is provided with a receptacle slot configured to accommodate at least a part of the conductive terminal. A side wall of the conductive terminal at least partly fits snugly with a slot wall of the receptacle slot to hinder the conductive terminal from rotating with respect to the second gasket.

In some embodiments, the side wall of the conductive terminal includes two first side wall units disposed opposite to each other. The slot wall of the receptacle slot includes two second side wall units disposed opposite to each other. Each of the first side wall units fits snugly with a corresponding second side wall unit. The first side wall unit is flat.

In some embodiments, the end portion is disposed on a side of the first gasket facing back from the second gasket.

In some embodiments, the conductive terminal is provided with a second through hole available for the shaft portion to pass through. An accommodation slot that connects with the second through hole is disposed on a side the conductive terminal facing back from the second gasket.

Beneficial effects of this application are as follows:
The battery cell according to the embodiments of this application includes a housing assembly, an electrode assembly, a conductive strip, and a feed-through assembly. The feed-through assembly includes a first gasket, a second gasket, a conductive terminal, and a rivet. The housing assembly is provided with an aperture configured to install the feed-through assembly. The first gasket is disposed on an outer surface of the housing assembly. The second gasket includes an integrally formed second gasket body and an annular sleeve. The second gasket body is disposed on an inner surface of the housing assembly. The annular sleeve is at least partly located in the aperture. The conductive terminal is accommodated in the housing assembly and is disposed on a side of the second gasket facing back from the first gasket. The rivet passes through the first gasket, the aperture, the annular sleeve, the second gasket body, and the conductive terminal, and is electrically connected to the conductive terminal. The rivet further abuts against the first gasket and the second gasket to form a seal at the aperture. The positive electrode plate or the negative electrode plate in the electrode assembly is electrically connected to the conductive terminal through the conductive strip, so that the rivet forms an external terminal of the battery cell.

In the battery cell according to the embodiments of this application, the feed-through assembly is not fixed to the housing assembly by using a thermal processing technique such as welding, but the first gasket, the second gasket, the conductive terminal, and the rivet itself are installed onto the housing assembly by using a clamping force and an interaction force. The clamping force is exerted on the first gasket, the second gasket, and the conductive terminal after the rivet is deformed through riveting, and the interaction force is generated by the housing assembly. This may improve a disadvantage that a significant change of a stress of the housing assembly occurs at a local position corresponding to the feed-through assembly due to a thermal effect. In other words, this may enhance the sealing performance of the battery cell to some extent.

### BRIEF DESCRIPTION OF DRAWINGS

One or more embodiments are described exemplarily with reference to the drawings corresponding to the embodiments. The exemplary description does not constitute any limitation on the embodiments. Components marked with the same reference numeral in the drawings represent similar components. Unless otherwise specified, the drawings do not constitute any scale limitation.
FIG. 1 is a schematic diagram of a battery cell as viewed from one direction according to an embodiment of this application;
FIG. 2 is a schematic diagram of a battery cell shown in FIG. 1 as viewed from another direction;
FIG. 3 is a partial schematic exploded view of the battery cell shown in FIG. 1;
FIG. 4 is a schematic sectional view of the battery cell shown in FIG. 2 and sectioned along an A-A line;
FIG. 5 is a schematic partial enlarged view of part B in FIG. 4;
FIG. 6 is a three-dimensional schematic diagram of a first gasket shown in FIG. 3;
FIG. 7 is a schematic sectional view of a first gasket shown in FIG. 3;
FIG. 8 is a three-dimensional schematic diagram of a second gasket shown in FIG. 3 as viewed from one direction;
FIG. 9 is a three-dimensional schematic diagram of a second gasket shown in FIG. 3 as viewed from another direction;
FIG. 10 is a three-dimensional schematic diagram of a conductive terminal shown in FIG. 3 as viewed from one direction;
FIG. 11 is a three-dimensional schematic diagram of a rivet shown in FIG. 3;
FIG. 12 is a three-dimensional schematic diagram of an insulation baffle shown in FIG. 3; and
FIG. 13 is a schematic exploded view of a feed-through assembly according to an embodiment of this application.

### Reference numerals:

1. Battery cell;
100. Housing assembly; 110. Housing; 120. Cover; 101. Accommodation cavity; 102. Aperture;
200. Electrode assembly;
300: Conductive strip;
400. Feed-through assembly; 410. First gasket; 420. Second gasket; 430. Conductive terminal; 440. Rivet; 411. First gasket body; 412. Annular bulge; 421. Second gasket body; 422. Annular sleeve; 4211. Positioning wall face; 4212. Second side wall unit; 431. First side wall unit; 441. Shaft portion; 442. End portion; 443. Limiting portion; 401. First through hole; 402. Third through hole; 403. Receptacle slot; 404. Second through hole;
500. Insulation baffle; 501. Conduit;
400'. Feed-through assembly; 410'. First gasket; 420'. Second gasket; 430'. Conductive terminal; 440'. Rivet; 441'. Shaft portion; 442'. End portion.

### DETAILED DESCRIPTION OF EMBODIMENTS

For ease of understanding this application, the following describes this application in more detail with reference to drawings and specific embodiments. It needs to be noted that an element referred to herein as "fixed to" or "fastened to" or "mounted to" another element may directly exist on the other element, or may be fixed to the other element through one or more intermediate elements. An element referred to herein as "connected to" another element may be connected to the other element directly or through one or more intermediate elements. The terms "vertical", "horizontal", "left", "right", "in", "out" and other similar expressions used herein are merely for ease of description.

Unless otherwise defined, all technical and scientific terms used herein have the same meanings as what is generally understood by a person skilled in the technical field of this application. The terms used in the specification of this application are merely intended to describe specific embodiments but not to limit this application. The term "and/or" used herein is intended to include any and all combinations of one or more related items preceding and following the term.

In addition, the technical features described below and mentioned in different embodiments of this application may be combined with each other so long as they do not conflict with each other.

In this specification, the meaning of "mounting" or "installation" includes fixing or confining an element or device to a specific position or place by welding, screwing, snap-fitting, bonding, and the like, where the element or device may be held stationary in the specific position or place or may move within a limited range, and the element or device may be detachable or undetachable after being fixed or confined to the specific position or place. This is not limited in the embodiments of this application.

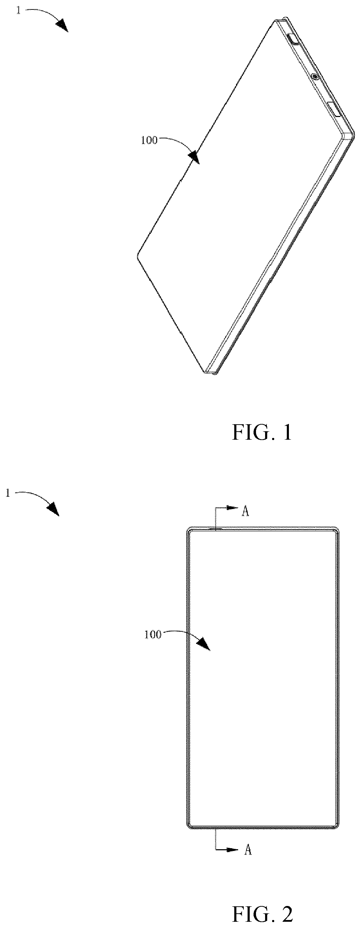

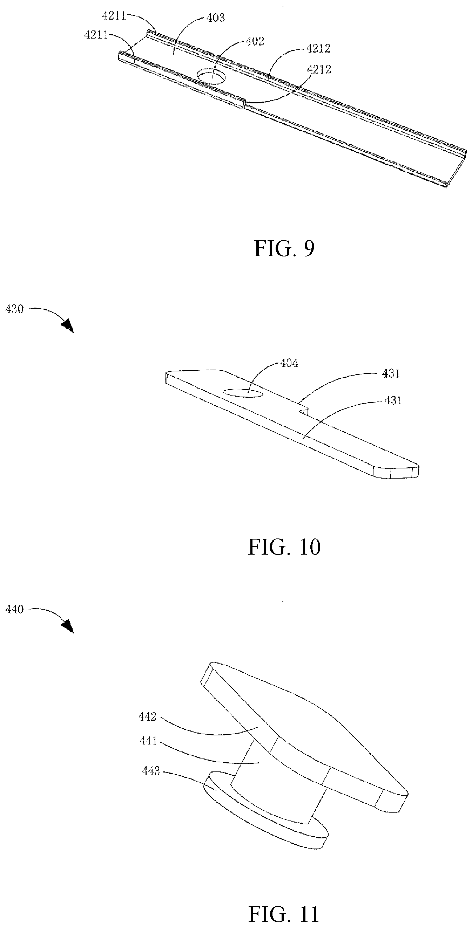

Refer to FIG. 1 to FIG. 3, which are schematic diagrams of a battery cell 1 viewed from two directions, and a schematic partial exploded view of the battery cell 1, respectively, according to embodiments of this application. The battery cell 1 includes a housing assembly 100, an electrode assembly 200, a conductive strip 300, and a feed-through assembly 400. The housing assembly 100 accommodates the electrode assembly 200 and the conductive strip 300. The housing assembly 100 is further provided with an aperture 102 configured to install the feed-through assembly 400. The feed-through assembly 400 includes a first gasket 410, a second gasket 420, a conductive terminal 430, and a rivet 440. The first gasket 410 is disposed on an outer surface of the housing assembly 100. The second gasket 420 includes an integrally formed second gasket body 421 and an annular sleeve 422. The second gasket body 421 is disposed on an inner surface of the housing assembly 100 and is disposed opposite to the first gasket 410. The annular sleeve 422 is fixed to a side of the second gasket body 421 facing the first gasket 410. The annular sleeve 422 is at least partly located in the aperture 102. The conductive terminal 430 is accommodated in the housing assembly 100 and is disposed on a side of the second gasket body 421 facing back from the first gasket 410. The conductive strip 300 is electrically connected to the electrode assembly 200 and the conductive terminal 430 separately. Referring to FIG. 11, the rivet 440 includes a shaft portion 441, an end portion 442, and a limiting portion 443. The shaft portion 441 passes through the first gasket 410, the aperture 102, the annular sleeve 422, the second gasket body 421, and the conductive terminal 430. The end portion 442 is disposed at an end of the shaft portion 441 protruding from the housing assembly 100. The limiting portion 443 is disposed at an end of the shaft portion 441 accommodated in the housing assembly 100, and is electrically connected to the conductive terminal 430. The end portion 442 and the limiting portion 443 squeeze the first gasket 410 and the second gasket 420 to seal the aperture 102.

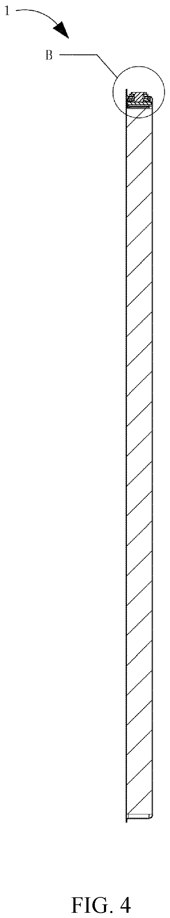

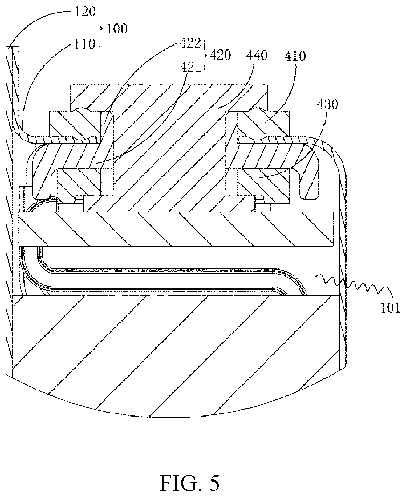

With respect to the housing assembly 100, refer to FIG. 4 and FIG. 5, which show a schematic sectional view of the battery cell 1 sectioned along an A-A line and a schematic partial enlarged view of part B, respectively, and also refer to FIG. 1 to FIG. 3. The housing assembly 100 is a flat cuboid as a whole, and includes a housing 110 and a cover 120. The housing 110 as a whole is a box-shaped structure that is open at one end. The cover 120 covers and is fixed to the open end of the housing 110. The housing 110 and the cover 120 jointly close in to form the accommodation cavity 101. In addition, the housing 110 is provided with an aperture 102 configured to install the feed-through assembly 400. The aperture 102 is in connection with the accommodation cavity 101. According to other embodiments of this application, the housing assembly 100 may be a non-flat cuboid, a cylinder, or another three-dimensional structure that includes a bottom, a wall, and a cover.

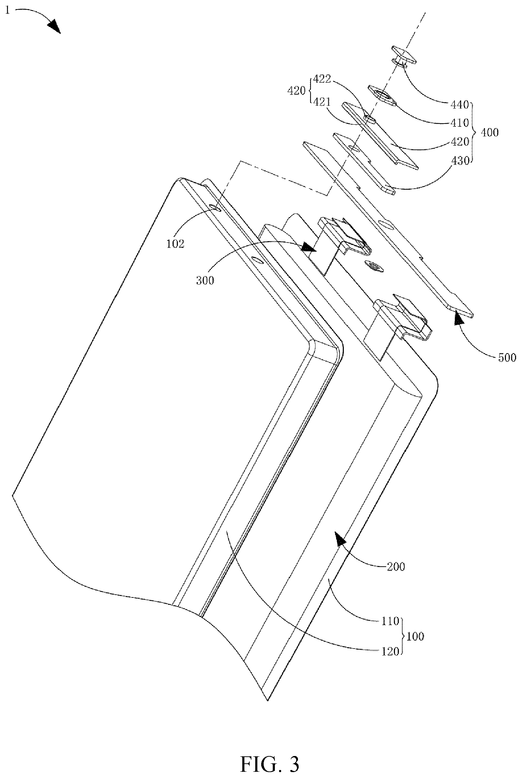

With respect to the electrode assembly 200, still refer to FIG. 3 and other drawings. The electrode assembly 200 is accommodated in the accommodation cavity 101 of the housing assembly 100, and includes alternately arranged positive electrode plates and negative electrode plates, and a separator disposed between the two electrode plates and configured to separate the two electrode plates. The electrode assembly 200 may be an approximate cuboid so as to be easily accommodated in the accommodation cavity 101. The electrode assembly 200 is a core component of the battery cell 1 for charging and discharging. Of the positive electrode plate and the negative electrode plate, one is electrically connected to the housing assembly 100 through an conductive element not shown in the figure, and the other is electrically connected to the feed-through assembly 400 through the conductive strip 300, so that the feed-through assembly 400 forms an external terminal of the battery cell 1. The housing assembly 100 is further provided with an electrolytic solution. The electrolytic solution may infiltrate the electrode assembly 200. The electrolytic solution is configured to provide an environment for conducting lithium ions. In this way, the lithium ions may be intercalated into the positive electrode plate or the negative electrode plate in appropriate time, thereby implementing charge and discharge processes of the battery cell 1.

Referring to FIG. 3 first, the feed-through assembly 400 may include a first gasket 410, a second gasket 420, a conductive terminal 430, and a rivet 440. The following describes the specific structures of such parts separately.

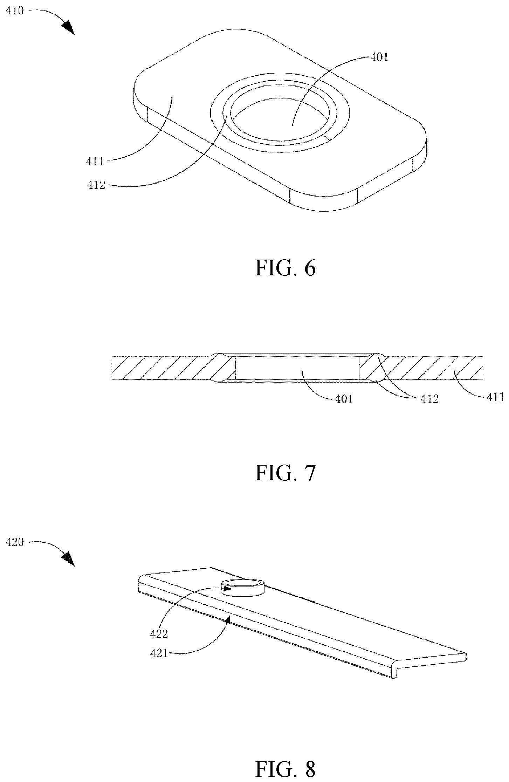

With respect to the first gasket 410, refer to FIG. 6 to FIG. 7, which are a three-dimensional schematic diagram and a schematic sectional view of the first gasket 410 respectively, and also refer to other drawings. The first gasket 410 is an insulation piece and is of relatively high elasticity. In some embodiments, the first gasket 410 is a plate-like structure as a whole, and is disposed on the outer surface of the housing assembly 100 and is disposed corresponding to the aperture 102. A first through hole 401 communicating with the aperture 102 is disposed on the first gasket 410, so as to be available for the rivet 440 to pass through.

With respect to the second gasket 420, refer to FIG. 8 to FIG. 9, which are three-dimensional schematic diagrams of the second gasket 420 as viewed from two directions respectively, and also refer to other drawings. The second gasket 420 is an insulation piece and is of relatively high elasticity, and includes a second gasket body 421 and an annular sleeve 422. In some embodiments, the second gasket body 421 is a plate-like structure as a whole, and is accommodated in the accommodation cavity 101 and abuts against the inner surface of the housing assembly 100. The second gasket body 421 is disposed opposite to the first gasket 410. The second gasket body 421 is provided with a third through hole 402. The third through hole 402 corresponds to the position of the aperture 102, so as to be available for the rivet 440 to pass through. The annular sleeve 422 is a cylindrical structure as a whole, and is fixed to a side of the second gasket body 421 facing the first gasket 410. The annular sleeve 422 passes through the aperture 102 and extends into the first through hole 401. In addition, the annular sleeve 422 is peripherally disposed on the outer circumference of the shaft portion 441 of the rivet 440 to isolate the shaft portion 441 from the inner wall of the aperture 102. This improves a disadvantage that the battery cell 1 is short-circuited due to physical contact between the shaft portion 441 of the rivet and the inner wall of the aperture 102. Understandably, in other embodiments of this application, the annular sleeve 422 may be entirely located in the aperture 102 instead, which extends into the aperture 102to isolate the shaft portion of the rivet 440 from the inner wall of the aperture 102.

In some embodiments, in order to hinder the second gasket body 421 from rotating around the rivet 440 with respect to the housing assembly 100, where the rotation interferes with other elements in the housing assembly 100 or causes other accidents, the second gasket body 421 may be fixed with respect to a circumferential direction of the aperture 102. This means that the second gasket body 421 may not rotate around the rivet 440. At least a part of the side wall of the second gasket body 421 fits snugly with the inner surface of the housing assembly 100 to hinder the second gasket body 421 from rotating around the rivet 440 with respect to the housing assembly 100. In some embodiments, the side wall of the second gasket body 421 includes two positioning wall faces 4211 disposed opposite to each other. One positioning wall face 4211 is in contact with the inner surface of the cover 120, and the other positioning wall face 4211 is in contact with the inner surface of the housing 110. Therefore, the second gasket body 421 is circumferentially fixed with respect to the aperture 102 to hinder rotating. In addition, under the compression of the rivet 440, the second gasket body 421 is fixed with respect to the housing assembly 100 along an axial direction of the rivet 440. This means that the second gasket body 421 is fixed with respect to the housing assembly 100. Understandably, in other embodiments of this application, the second gasket body 421 may be directly fixed to the housing assembly 100 by means of bonding, snap-fitting, screwing, and the like instead to achieve the foregoing purpose.

With respect to the conductive terminal 430, refer to FIG. 10, which is a three-dimensional schematic diagram of the conductive terminal 430 as viewed from one direction, and also refer to other drawings. A receptacle slot 403 is disposed on a side of the second gasket 420 facing back from the first gasket 410. The conductive terminal 430 is at least partly accommodated in the receptacle slot 403 and is electrically connected to an end of the conductive strip 300 away from the electrode assembly 200. The conductive terminal 430 may be a flat plate-like structure as a whole, and is provided with a second through hole 404 available for the rivet 440 to pass through. On the one hand, the arrangement of the receptacle slot 403 may hinder the conductive terminal 430 from being exposed to the second gasket 420 and thereby occupying too much space. On the other hand, the arrangement may also improve, to some extent, a disadvantage that a side of the conductive terminal 430 is in contact with the housing assembly 100 when the conductive terminal 430 rotates accidentally around the rivet 440 with respect to the housing assembly 100, thereby reducing the hazard of electrical contact between the conductive terminal 430 and the housing assembly 100.

In some embodiments, in order to hinder the conductive terminal 430 from interfering with other parts in the housing assembly 100 such as the conductive strip 300 due to rotation of the conductive terminal 430 inside the housing assembly 100, the side wall of the conductive terminal 430 at least partly fits snugly with the side wall of the receptacle slot 403 to hinder the conductive terminal 430 from rotating with respect to the second gasket 420. In some embodiments, referring to FIG. 9 and FIG. 10 concurrently, the side wall of the conductive terminal 430 includes two first side wall units 431 disposed opposite to each other. The receptacle slot 403 extends along a length direction of the second gasket 420, and runs through the second gasket 420 at both ends. The slot wall of the receptacle slot 403 includes two second side wall units 4212 disposed opposite to each other. Each of the first side wall units 431 fits snugly with a corresponding second side wall unit 4212. Therefore, the conductive terminal 430 is circumferentially fixed with respect to the rivet 440, and hinder rotating with respect to the second gasket 420 and the housing assembly 100. In addition, under the action of the rivet 440, the conductive terminal 430 is fixed along the axial direction of the rivet 440, and therefore, the conductive terminal 430 is fixed with respect to the housing assembly 100. In this embodiment, the first side wall unit 431 is flat, and the second side wall unit 4212 is also flat. Understandably, in other embodiments of this application, the first side wall unit 431 and the second side wall unit 4212 may be other shapes instead such as a cylindrical surface, a curved surface, or the like, as long as the conductive terminal 430 is circumferentially fixed with respect to the rivet 440 after the first side wall unit 431 fits snugly with the second side wall unit 4212. In addition, in other embodiments of this application, the shape of the conductive terminal 430 and the shape of the receptacle slot 403 may be other shapes instead, as long as the side wall of the conductive terminal 430 at least partly fits snugly with the slot wall of the receptacle slot 403 after the conductive terminal 430 is accommodated in or at least partly accommodated in the receptacle slot 403, and as long as the conductive terminal 430 does not rotate with respect to the second gasket 420. For example, in some embodiments, a cross-sectional profile of the slot wall of the receptacle slot 403 is a closed polygon, the shape of the conductive terminal 430 fits the receptacle slot 403, and the side wall of the conductive terminal 430 fits exactly with the slot wall of the receptacle slot 403.

For the rivet 440, refer to FIG. 11, which is a three-dimensional schematic diagram of the rivet 440. The rivet 440 is an I-shape as a whole and includes a shaft portion 441, an end portion 442, and a limiting portion 443. The shaft portion 441 is a columnar mechanism, and passes through the first gasket 410, the annular sleeve 422, the aperture 102, the second gasket body 421, and the conductive terminal 430. The end portion 442 is formed by extending outward an end of the shaft portion 441 protruding from the housing assembly 100, and is a flat plate-like structure as a whole. The cross-sectional profile of the end portion 442 is larger than the cross-sectional profile of the shaft portion 441. The limiting portion 443 is formed by extending outward an end of the shaft portion 441 accommodated in the housing assembly 100, and has a cross-sectional profile slightly larger than the cross-sectional profile of the shaft portion 441. The first gasket 410, the second gasket 420, and the conductive terminal 430 are all located between the end portion 442 and the limiting portion 443. The end portion 442 abuts the first gasket 410. The limiting portion 443 abuts and is electrically connected to the conductive terminal 430. The end portion 442 collaborates with the limiting portion 443 to squeeze the first gasket 410 and the second gasket 420 to seal the aperture 102. At the same time, the first gasket 410 separates the housing assembly 100 from the end portion 412, the second gasket body 421 separates the housing assembly 100 from the limiting portion 413, and the annular sleeve 422 separates the housing assembly 100 from the shaft portion 411, so as to hinder electrical contact between the rivet 440 and the housing assembly 100. In some embodiments, an accommodation slot (not shown in the drawing) in communication with the second through hole 404 and configured to accommodate the limiting portion 443 is disposed at an end of the conductive terminal 430 facing the limiting portion 443, so as to hinder the limiting portion 443 from protruding from the conductive terminal 430, or to reduce the height by which the limiting portion 443 protrudes from the conductive terminal 430. In some embodiments, the side wall of the limiting portion 443 at least partly fits snugly with the side wall of the accommodation slot to hinder the rivet 440 from rotating with respect to the conductive terminal 430. In some embodiments, the side wall of the limiting portion 443 includes two first limiting wall faces disposed opposite to each other. Correspondingly, the slot wall of the accommodation slot includes two second limiting wall faces disposed opposite to each other. Each first limiting wall face fits snugly with a corresponding second limiting wall face. It is worth mentioning that in this embodiment, the limiting portion 443 is formed by compressive deformation of the rivet 440 in a riveting process, and the shape of the accommodation slot may guide the formation of the shape arising from the deformation of the limiting portion 443. Before the riveting process, the shape of the limiting portion 443 and the shape of the shaft portion 441 are the same, and both are columnar structures.

In some embodiments, in order to reinforce the sealing effect exerted by the rivet 440 abutting against the first gasket 410, in this embodiment, the first gasket 410 may include a first gasket body 411 and an annular bulge 412. In some embodiments, referring back to FIG. 6 and FIG. 7, and also referring to other drawings, the first gasket body 411 is a thin plate-like structure as a whole, and is disposed corresponding to the aperture 102, and is provided with the first through hole 401. The annular bulge 412 is a closed ring shape, and is disposed on an end face of the first gasket body 411. According to an embodiment of this application, the annular bulge 412 may be peripherally disposed at the edge of the end of the first through hole 401. According to another embodiment of this application, the annular bulge 412 may be peripherally disposed at any middle position on the end face of the first gasket body 411. According to still another embodiment of this application, the annular bulge 412 may be an irregular ring shape, and disposed on the end face of the first gasket body 411 in a closed loop manner. The annular bulge 312 protrudes from the end face of the first gasket body 411. Therefore, the pressure received by the annular bulge 412 is greater than the pressure received at other positions on the end face of the first gasket body 411 in a process of the rivet 440 abutting against the first gasket 410. Therefore, the annular bulge is more prone to deform than other positions of the end face, thereby achieving a better sealing effect. In some embodiments, the annular bulge 412 is located at the edge of the first through hole 401, so that a deformed part of the annular bulge 412 may further implement interference fit with the annular sleeve 422 (or the shaft portion 441) to further strengthen the sealing effect between the first gasket 410, the annular sleeve 422, and the rivet 440. In some embodiments, the annular bulge 412 is disposed on both end faces of the first gasket body 411. It is worth noting that the "end face" mentioned in this paragraph means a surface of the first gasket body 411, where the surface is perpendicular to an extension direction of the shaft portion 441 of the rivet. The end face may mean a surface of the first gasket body 411, where the surface faces a side of the housing assembly 100, or faces back from a side of the housing assembly 100.

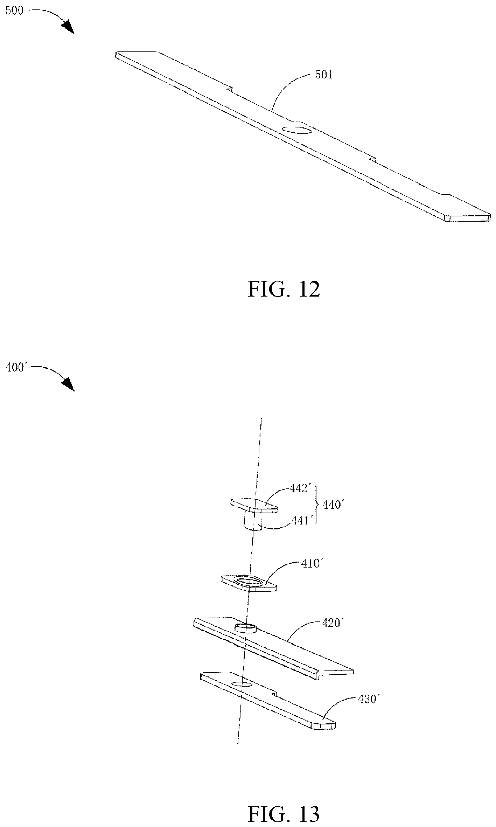

In some embodiments, in order to hinder an electrode plate electrically connected to the housing assembly 100 in the electrode assembly 200 from physically contacting the rivet 440 (or the conductive terminal 430) so as to hinder a short circuit of the battery cell 1, the battery cell 1 may include an insulation baffle 500. In some embodiments, refer to FIG. 12, which is a three-dimensional schematic diagram of the insulation baffle 500, and also refer to other drawings. The insulation baffle 500 is accommodated in the housing assembly 100, and is disposed between the limiting portion 443 of the rivet 440 and the electrode assembly 200, so as to separate the rivet 440 from the electrode assembly 200 and thus hinder physical contact between the electrode assembly 200 and the rivet 440 (or the conductive terminal 430). The insulation baffle 500 is fixed to a side of the second gasket body 421 by a binder, where the side faces back from the first gasket 410. The insulation baffle is provided with a conduit 501. The conduit 501 runs through the insulation baffle 500 along a direction in which the electrode assembly 200 points to the rivet 440. One end of the conductive strip 300 is connected to an electrode plate in the electrode assembly 200, and the other end passes through the conduit 501 and is connected to the rivet 440. It is worth noting that, in this embodiment, the conductive strip 300 is fixed to the electrode assembly 200 by laser welding, and the conductive strip 300 is fixed to the conductive terminal 430 also by laser welding. Instead, in other embodiments, the conductive strip 300 may be fixed to the electrode assembly 200 by other means such as resistance welding, and the conductive strip 300 may be fixed to the conductive terminal 430 by other means such as resistance welding.

The battery cell 1 according to the embodiments of this application includes a housing assembly 100, an electrode assembly 200, a conductive strip 300, and a feed-through assembly 400. The feed-through assembly 400 includes a first gasket 410, a second gasket 420, a conductive terminal 430, and a rivet 440. The first gasket 410 is disposed on an outer surface of the housing assembly 100. The second gasket 420 includes a second gasket body 421 and an annular sleeve 422. The second gasket body 421 is disposed on an inner surface of the housing assembly 100 and is disposed opposite to the first gasket 410. The annular sleeve 422 at least partly extends into the aperture of the housing assembly 100. The conductive terminal 430 is disposed on a side of the second gasket 420 facing back from the first gasket 410. The shaft portion 441 of the rivet 440 passes through the first gasket 410, the annular sleeve 422, the aperture 102, the second gasket body 421, and the conductive terminal 430. The end portion 442 of the rivet 440 is disposed at an end of the shaft portion 441 protruding from the housing assembly 100. The limiting portion 443 of the rivet 440 is disposed at an end of the shaft portion accommodated in the housing assembly 100, and is electrically connected to the conductive terminal 430. The end portion 442 and the limiting portion 443 squeeze the first gasket 410 and the second gasket 420 to seal the aperture 102. Either the positive electrode plate or the negative electrode plate in the electrode assembly 200 is electrically connected to the conductive terminal 430 through the conductive strip 300, so that the rivet 440 forms an external terminal of the battery cell 1.

In the battery cell 1 according to this application, the feed-through assembly 400 is not fixed to the housing assembly 100 by using a thermal processing technique such as welding, but the first gasket 410, the second gasket 420, the conductive terminal 430, and the rivet 440 itself are installed onto the housing assembly 100 by using a clamping force and an interaction force. The clamping force is exerted on the first gasket 410, the second gasket 420, and the conductive terminal 430 after the rivet 440 is deformed through riveting, and the interaction force is generated by the housing assembly 100. This may improve a disadvantage that a significant change of a stress of the housing assembly 100 occurs at a local position corresponding to the feed-through assembly 400 due to a thermal effect. In other words, this may enhance the sealing performance of the battery cell 1 to some extent.

Based on the same inventive concept, this application further provides a feed-through assembly 400'. In some embodiments, refer to FIG. 13, which is a schematic exploded view of the feed-through assembly 400'. Also refer to FIG. 1 to FIG. 12, the structure of the feed-through assembly 400' is basically the same as that of the feed-through assembly 400 in the foregoing embodiment. For ease of description, the feed-through assembly 400 in the foregoing embodiment is hereinafter referred to as a first feed-through assembly 400, and the feed-through assembly 400' in this embodiment is referred to as a second feed-through assembly 400'.

In some embodiments, the second feed-through assembly 400' includes a first gasket 410', a second gasket 420', a conductive terminal 430', and a rivet 440'. The shape, structure, and positional relationship of the first gasket 410', the second gasket 420', and the conductive terminal 430' are the same as the first gasket 410, the second gasket 420, and the conductive terminal 430 in the first feed-through assembly 400, respectively. For details, reference may be made to the foregoing embodiment. The first gasket 410', the second gasket 420', and the conductive terminal 430' are not described in detail in this embodiment. The main difference between the second feed-through assembly 400' and the first feed-through assembly 400 is the rivet 440', as detailed below:

The rivet 440 in the first feed-through assembly 400 includes a shaft portion 441, an end portion 442, and a limiting portion 443.

The rivet 440' in the second feed-through assembly 400' includes a shaft portion 441' and an end portion 442'. The shaft portion 441' is configured to pass through the first gasket 410', the annular sleeve, the second gasket body, and the conductive terminal 430'. The end portion 442' is disposed at a first end of the shaft portion 441', and is formed by extending the first end of the shaft portion 441' outward. A second end of the shaft portion 441' is configured to form a limiting portion through compression in a riveting process (reference may be made to the limiting portion 443 in the first feed-through assembly), so that either the end portion 442' or the limiting portion is connected to the conductive terminal 430', and that the end portion 442' and the limiting portion squeeze the first gasket 410' and the second gasket 420'. In this embodiment, the end portion 442' is fixed to an end of the shaft portion 441' close to the first gasket 410', that is, a side of the first gasket 410' facing back from the second gasket 420'. Instead, in other embodiments of this application, the end portion 442' may be fixed to an end of the shaft portion 441' away from the first gasket 410'.

The second feed-through assembly 400' may be applied to a battery cell, and is fixed in basically the same way as the first feed-through assembly 400. The second feed-through assembly 400' may be fixed to the housing assembly just through a riveting process of the rivet 440', without involving a thermal processing technique such as welding. Therefore, the second feed-through assembly 400' may improve a disadvantage that a significant change of a stress of the housing assembly occurs at a local position corresponding to the feed-through assembly due to a thermal effect.

Finally, it needs to be noted that the foregoing embodiments are merely intended to describe the technical solutions of this application, but not to limit this application. Based on the concept of this application, the foregoing embodiments may be combined and the technical features in different embodiments may be combined, the steps may be implemented in any order, and many other variations may be made to different aspects of this application described above. For brevity, the variations are not provided herein in detail. Although this application is described in detail with reference to the foregoing embodiments, a person of ordinary skill in the art understands that modifications may still be made to the technical solutions described in the foregoing embodiments, or equivalent substitutions may still be made to some technical features in the technical solutions, without making the essence of the corresponding technical solutions depart from the scope of the technical solutions of the embodiments of this application.

## Claims

1. A feed-through assembly (400), **characterized in that**, the feed-through assembly (400) comprises:
a first gasket (410);
a second gasket (420) comprising an integrally formed second gasket body (421) and an annular sleeve (422), wherein the second gasket body (421) is disposed opposite to the first gasket (410), and the annular sleeve (422) is fixed to a side of the second gasket body (421) facing the first gasket (410);
a conductive terminal (430) disposed on a side of the second gasket body (421) facing back from the first gasket (410); and
a rivet (440) comprising a shaft portion (441), an end portion (442) and a limiting portion (443), wherein the shaft portion (441) is configured to pass through the first gasket (410), the annular sleeve (422), the second gasket body (421), and the conductive terminal (430), and the end portion (442) is disposed at a first end of the shaft portion (441), a second end of the shaft portion (441) is configured to form the limiting portion (443) by being compressed in a riveting process, so that either the end portion (442) or the limiting portion (443) is connected to the conductive terminal (430), and the end portion (442) and the limiting portion (443) squeeze the first gasket (410) and the second gasket (420).

2. . The feed-through assembly (400) according to claim 1, **characterized in that**, the first gasket (410) comprises a first gasket body (411) and an annular bulge (412), the first gasket body (411) is provided with a first through hole (401) available for the rivet (440) to pass through; and
the annular bulge (412) is disposed on an end face of the first gasket body (411) and surrounds an end of the first through hole (401).

3. . The feed-through assembly (400) according to claim 1, **characterized in that**, the second gasket body (421) is provided with a receptacle slot (403) configured to accommodate at least a part of the conductive terminal (430); and
a side wall of the conductive terminal (430) at least partly fits snugly with a slot wall of the receptacle slot (403).

4. . The feed-through assembly (400) according to claim 3, **characterized in that**, the side wall of the conductive terminal (430) comprises two first side wall units (431) disposed opposite to each other, the slot wall of the receptacle slot (403) comprises two second side wall units (4212) disposed opposite to each other, and each of the first side wall units (431) fits snugly with a corresponding second side wall unit (4212); and
the first side wall unit (431) is flat.

5. . The feed-through assembly (400) according to claim 1, **characterized in that**, the end portion (442) is disposed on a side of the first gasket (410) facing back from the second gasket (420).

6. . The feed-through assembly (400) according to claim 5, **characterized in that**, the conductive terminal (430) is provided with a second through hole (404) available for the shaft portion (441) to pass through, and an accommodation slot that connects with the second through hole (404) is disposed on a side of the conductive terminal (430) facing back from the second gasket (420).

7. . The feed-through assembly (400) according to claim 1, **characterized in that**, the limiting portion (443) is formed by compressive deformation of the rivet (440) in a riveting process.

8. . A battery cell (1), **characterized in that**, the battery cell (1) comprises a housing assembly (100), an electrode assembly (200), a conductive strip (300), and the feed-through assembly (400) according to any one of claims 1 to 7;
the housing assembly (100) accommodates the electrode assembly (200) and the conductive strip (300), and the housing assembly (100) is provided with an aperture (102) configured to install the feed-through assembly (400);
wherein the first gasket (410) is disposed on an outer surface of the housing assembly (100);
the second gasket body (421) is disposed on an inner surface of the housing assembly (100), and the annular sleeve (422) is at least partly located in the aperture (102);
the conductive terminal (430) is accommodated in the housing assembly (100);
the shaft portion (441) passes through the aperture (102), and the end portion (442) is disposed at an end of the shaft portion (441) protruding from the housing assembly (100), the limiting portion (443) is disposed at an end of the shaft portion (441) accommodated in the housing assembly (100), and is electrically connected to the conductive terminal (430);
the conductive strip (300) is electrically connected to the electrode assembly (200) and the conductive terminal (430) separately.

9. . The battery cell (1) according to claim 8, **characterized in that**, a side wall of the second gasket body (421) at least partly fits snugly with the inner surface of the housing assembly (100).

10. . The battery cell (1) according to claim 8, **characterized in that**, the second gasket (420) is fixed to the housing assembly (100).

11. . The battery cell (1) according to claim 8, **characterized in that**, the conductive terminal (430) is provided with an accommodation slot configured to accommodate the limiting portion (443).

12. . The battery cell (1) according to claim 11, **characterized in that**, a side wall of the limiting portion (443) at least partly fits snugly with a side wall of the accommodation slot.

13. . The battery cell (1) according to claim 8, **characterized by** further comprising an insulation baffle (500) disposed between the limiting portion (443) and the electrode assembly (200); and
the insulation baffle (500) is provided with a conduit (501), and the conductive strip (300) passes through the conduit (501) and is connected to the rivet (440).

14. . The battery cell (1) according to claim 13, **characterized in that**, the insulation baffle (500) is adhesively fixed to a side of the second gasket body (421) facing back from the first gasket (410).

15. . An electronic device, **characterized in that**, the electronic device comprises the battery cell (1) according to any one of claims 8 to 14
